Europäisches Patentamt

European Patent Office

Office européen des brevets

(19)

(11) Numéro de publication: **0 230 812**
**A1**

(12) **DEMANDE DE BREVET EUROPEEN**

(21) Numéro de dépôt: **86402750.3**

(22) Date de dépôt: **10.12.86**

(51) Int. Cl.⁴: **G01V 11/00 , G01V 1/16**

(30) Priorité: **16.12.85 FR 8518613**

(43) Date de publication de la demande:
**05.08.87 Bulletin 87/32**

(84) Etats contractants désignés:
**DE FR GB IT NL**

(71) Demandeur: **COMMISSARIAT A L'ENERGIE ATOMIQUE**
**31/33, rue de la Fédération**
**F-75015 Paris(FR)**

(72) Inventeur: **Ruzie, Gérard**
**12, rue Héroux**
**F-91410 Dourdan(FR)**
Inventeur: **Batot, Jean**
**6, rue du Peuple Lalance La Norville**
**F-91290 Arpajon(FR)**
Inventeur: **Marchand, Jean-Louis**
**86, rue de la Libération**
**F-91770 Saint Vrain(FR)**

(74) Mandataire: **Mongrédien, André et al**
**c/o BREVATOME 25, rue de Ponthieu**
**F-75008 Paris(FR)**

(54) **Sonde sismique notamment utilisable dans un puits de forage non tubé.**

(57) La sonde comprenand un corps central et des bras (116) se déployant radialement dans des directions différentes. L'extrémité des bras (116) est pourvue de moyens d'ancrage (132) sur la paroi (2) du puits et de géophones dans un boîtier (130).

FIG. 3

Xerox Copy Centre

EP 0 230 812 A1

## Sonde sismique notamment utilisable dans un puits de forage non tubé

La présente invention a pour objet une sonde sismique. Elle est utilisée notamment dans les puits de forage non tubés.

Après avoir foré un puits, il est intéressant de modéliser le terrain autour du puits en vitesses d'onde sismique.

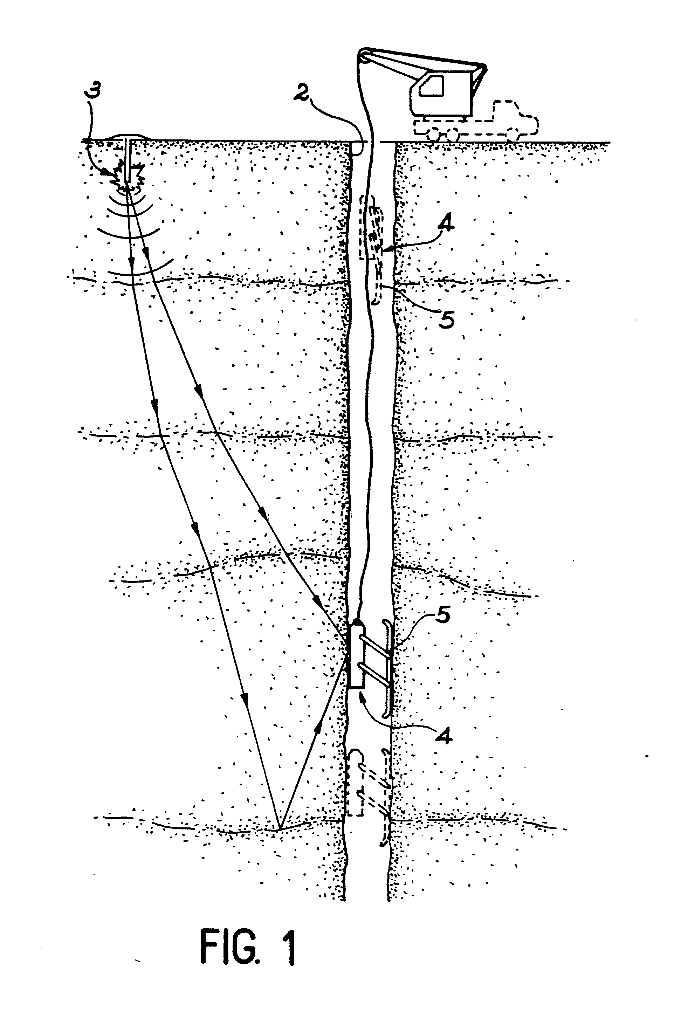

Afin d'illustrer les techniques utilisées actuellement à cet effet, on a représenté sur la figure 1 une coupe du terrain passant par l'axe vertical du puits de forage.

Dans ce puits dont la paroi est référencée 2, on fait descendre à des profondeurs successives différentes une sonde sismique 4. L'onde sismique est créée à la surface du sol par un tir à l'explosif ou une source sismique 3.

Une sonde sismique se compose généralement de trois parties principales :
- un ensemble de capteurs, habituellement des géophones verticaux et éventuellement horizontaux ;
- un dispositif d'ancrage qui permet d'appliquer le corps de sonde contre la paroi du puits ;
- un compartiment électronique pour la commande de la sonde et la transmission des signaux captés par les géophones.

Dans certains cas, il est avantageux de détecter des ondes sismiques se déplaçant presque verticalement et d'obtenir ainsi un profil sismique du terrain le plus vertical possible. A cet effet, il est nécessaire d'avoir un ancrage efficace des capteurs à chaque point de mesure afin d'obtenir un couplage de ces capteurs avec le terrain le meilleur possible et d'enregistrer la totalité des ondes sismiques se propageant dans le terrain sans être perturbé par des résonances parasites.

Les dispositifs d'ancrage sont habituellement réalisés à l'aide d'un ressort linéaire, d'un moteur électrique ou d'un vérin hydraulique relevant un ou deux patins 5 (voir figure 1), de telle sorte qu'ils plaquent contre la paroi du puits la totalité du corps de la sonde qui contient les capteurs.

Or les sondes sont conçues pour la plupart pour travailler dans des puits de petit diamètre (10 à 30 cm environ) et possèdent un corps de sonde d'une longueur dépassant parfois deux mètres. De ce fait, la paroi du puits doit donc être régulière au moins sur la longueur de la sonde de façon à ce que celle-ci soit bien plaquée à la paroi et donc que les géophones soient bien couplés au terrain.

Ce type de sonde sismique n'est donc bien pas adapté aux puits de forage en "trou ouvert", c'est-à-dire non tubés, qui présentent généralement un diamètre variable et de nombreuses irrégularités.

L'invention a pour objet une sonde qui évite ces inconvénients de l'art antérieur. Elle présente essentiellement un corps central muni de bras s'écartant radialement dans des directions différentes et terminés par des moyens d'ancrage et des capteurs. En position de travail, le corps central ne touche pas la paroi du puits de forage : le contact avec le puits est assuré uniquement par les extrémités des bras.

Les moyens d'ancrage assurent un bon couplage des extrémités des bras, et par conséquent des capteurs qui y sont logés, avec la paroi du puits ; le corps central peut être découplé plus facilement des capteurs.

Plus précisément, l'invention a pour objet une sonde sismique comprenant un corps central, caractérisée en ce qu'elle comprend en outre au moins trois bras déployables dans des directions différentes autour du corps central, l'extrémité de ces bras étant munie de moyens d'ancrage et de capteurs ; ainsi que des moyens de déployer et de plaquer les extrémités des bras sur la paroi d'un puits de forage.

De façon très avantageuse, les moyens d'ancrage comprennent au moins une pointe constituant simultanément la partie réceptrice d'un capteur.

De manière préférée, les bras sont au nombre de cinq et se déploient à des intervalles angulaires approximativement égaux.

Dans une réalisation préférée, chaque bras se meut indépendamment des autres au moyen d'un vérin dont la tige porte les moyens d'ancrage et les capteurs.

D'autres avantages et caractéristiques de l'invention ressortiront mieux de la description qui suit, donnée à titre explicatif mais nullement limitatif, en référence aux figures annexées, sur lesquelles :
- la figure 1, déjà décrite, représente une coupe du terrain passant par l'axe vertical du puits de forage,
- la figure 2 représente une vue latérale de la sonde sismique selon un premier mode de réalisation de l'invention, son carénage et le puits étant représentés en coupe longitudinale, la moitié gauche de la sonde montrant le bras télescopique dans une position repliée et la moitié droite de la sonde montrant le bras télescopique dans une position dépliée,
- la figure 3 représente une vue latérale de la sonde sismique selon un second mode de réalisation de l'invention, la moitié gauche de la sonde montrant le bras télescopique en position de repos et la moitié droite de la sonde montrant ce bras en position de travail,

-les figures 4 et 5 représentent schématiquement une vue de dessus des ancrages sur la paroi du puits réalisés par les sondes sismiques des figures 2 et 3 respectivement,

-et la figure 6 représente une vue latérale d'un troisième mode de réalisation de l'invention.

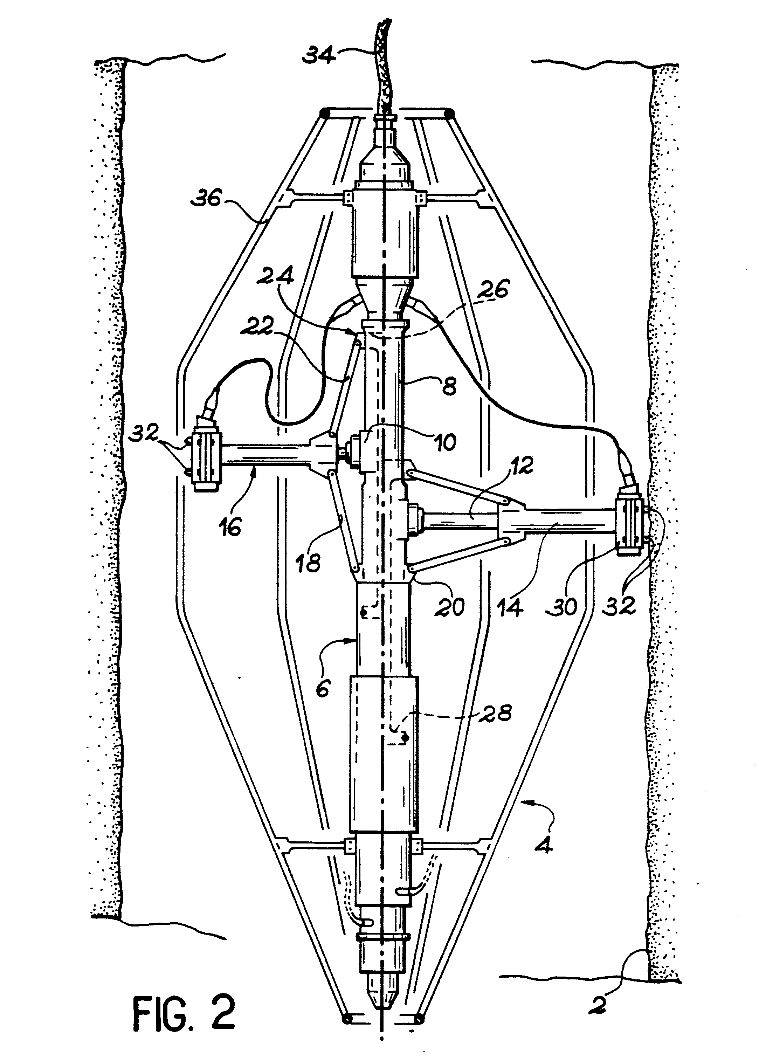

Un premier mode de réalisation de la sonde selon l'invention est représenté sur la figure 2 et comporte un corps central 6 contenant une partie électronique et un compas magnétique permettant le contrôle de l'orientation de la sonde dans le puits. La sonde comporte de plus une partie mécanique et hydraulique que nous allons maintenant décrire de façon précise.

Un tube de glissement 8 cylindrique est formé dans la partie centrale dudit corps central 6.

Une couronne 10 est montée coulissante sur ce tube de glissement 8. Des tiges 12, par exemple au nombre de cinq, sont fixées radialement sur cette couronne 10. Un tube, dit tube support 14, est enfilé sur chacune des tiges 12. L'ensemble formé par chaque couple tige et tube support constitue un bras 16.

Une première barre 18 est fixée à pivotement sur l'extrémité de chaque tube support 14 orientée vers la couronne 10 et sur une articulation fixe 20 disposée à une extrémité du tube de glissement 8.

Une seconde barre 22 est fixée à pivotement sur ladite extrémité du tube support 14 et sur une articulation mobile 24. Cette articulation 24 est constituée par l'extrémité d'une tige de vérin 26 faisant saillie radialement du tUbe de glissement 8 par des lumières longitudinales usinées dans ce tube. La tige de vérin 26 est apte à coulisser à l'inté rieur du tube de glissement 8. Elle est solidaire d'un piston 28 qui est actionné hydrauliquement.

Lorsque le piston 28 est actionné, l'articulation mobile 24 est animée d'un mouvement longitudinal, les barres 18, 22, la couronne 10, les tiges 12 et les tubes support 14 coopérant pour que ces tubes 14 soient alors animés d'un mouvement radial d'une position repliée vers une position dépliée et inversement.

Un boîtier porte-capteurs 30 est fixé à l'extrémité libre de chacun des tubes support 14. Chaque boîtier 30 est pourvu d'au moins une pointe 32 apte à s'ancrer dans la paroi du puits de forage. Lorsque la sonde est en position dépliée, chaque boîtier 30 est plaqué contre cette paroi sur toute sa longueur quelle que soit l'irrégularité de celle-ci, le couplage avec le terrain se faisant par les pointes 32 pour éviter des résonances parasites. Les pointes 32 empêchent également un glissement éventuel de la sonde lors des mesures.

Contrairement aux sondes habituelles, le corps central n'est donc plus en contact avec la paroi 2 du puits.

Chaque boîtier 30 est équipé notamment de deux capteurs ou géophones verticaux reliés en série, de deux géophones horizontaux montés en quadrature sur un support couplé au boîtier et d'un capteur de proximité. Celui-ci permet de contrôler le bon ancrage de chacun des bras 16 et comprend, par exemple, un jeu de rondelles "Belleville" séparant chaque pointe 32 d'un capteur de contact. Celui-ci délivre un signal lorsque les rondelles sont suffisamment écrasées sous l'effet d'une force d'ancrage désirée.

La sonde selon l'invention est suspendue par un câble 34 fixé sur l'extrémité supérieure du corps central 6. Avantageusement, ce câble 34 transmet également les signaux de commande et de mesure et à cet effet est de type classique, par exemple à sept conducteurs pour diagraphie.

Un berceau de protection 36, fixé sur le corps central 6 protège la sonde des chocs lorsque la sonde est manoeuvrée dans ce puits.

Le principe d'utilisation de la sonde selon l'invention est le suivant :

On descend la sonde dans le puits à une certaine profondeur en déroulant le câble 34. Lorsque la sonde est stabilisée, on actionne l'ouverture des bras 16 jusqu'à ce que leur ancrage dans la paroi soit suffisant (le signal de bon couplage avec le terrain étant émis par lesdits capteurs de contact).

Le tir peut alors être effectué et les mesures enregistrées.

On actionne alors la fermeture des bras 16 pour descendre ou monter la sonde à une autre profondeur voulue.

De façon pratique, les barres 18, 12 sont fixées à leur articulation par des goupilles de sécurité qui cassent lorsqu'une certaine force leur est appliquée. On peut ainsi remonter la sonde même si un incident bloque les bras télescopiques 16 en position dépliée.

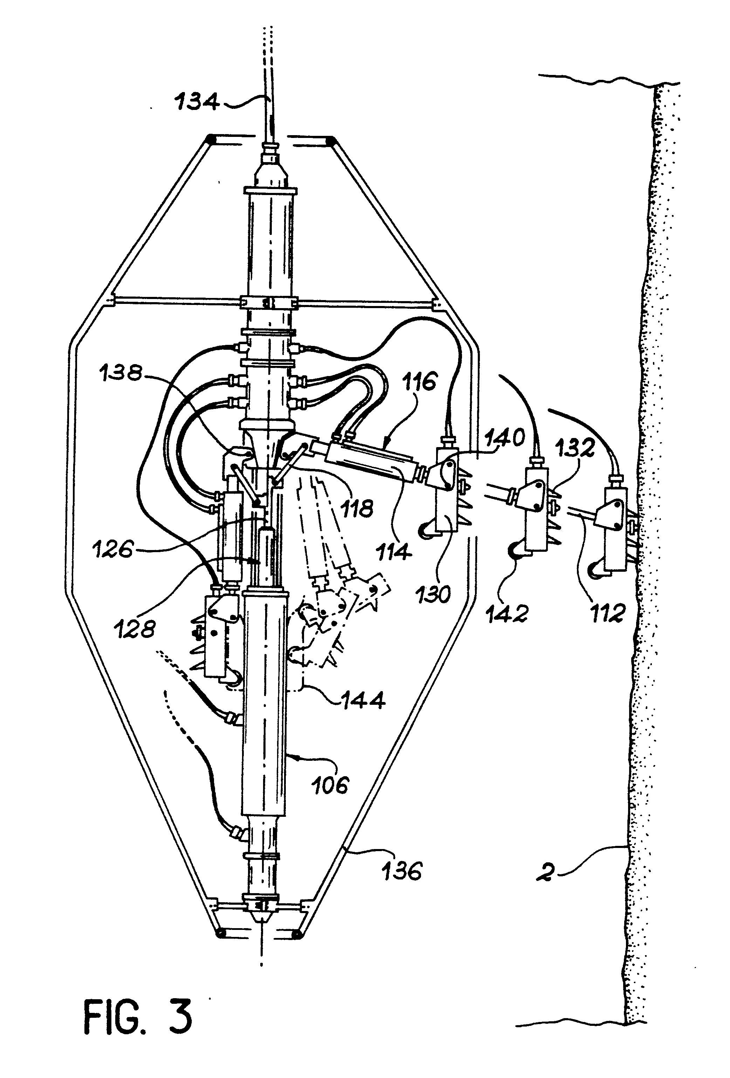

Un second mode de réalisation de la sonde selon l'invention est représenté sur la figure 3 et comporte un corps central 106 contenant une partie électronique, un compas magnétique et une partie mécanique et hydraulique qui va être décrite ci-après.

Des bras 116, par exemple au nombre de cinq, sont liés chacun par une articulation 138 au corps central 106. Chaque bras 116 est constitué par le corps 114 et la tige 112 d'un vérin hydraulique.

Une extrémité d'une biellette 118 est articulée sur le corps 114 de chaque bras 116 à proximité de l'articulation 138 correspondante. L'autre extrémité de la biellette 118 est articulée sur l'extrémité de la tige 126 d'un vérin 128 logé dans le corps central 106.

La tige 126 du vérin 128, les biellettes 118 et les articulations 138 coopèrent de telle manière que les bras 116 occupent une position dite de repos pour laquelle ils sont sensiblement parallèles au corps central 106, lorsque la tige 126 est rentrée, et une position dite de travail, pour laquelle les bras sont sensiblement perpendiculaires au corps central 106, lorsque la tige 126 est sortie.

L'extrémité de chaque bras 116, opposée à celle articulée sur le corps central, est liée par une articulation 140 à un boîtier porte-capteurs 130. Chaque boîtier 130 est pourvu d'au moins une pointe 132 apte à s'ancrer dans la paroi du puits de forage.

L'extrémité inférieure de chaque boîtier 130 est munie d'une roulette 142 apte à s'introduire dans une goulotte 144 fixée sur le corps central de telle manière que le boîtier occupe une position sensiblement parallèle au bras 116, lorsque celui-ci est en position de repos et une position sensiblement perpendiculaire au bras lorsque celui-ci est en position de travail.

De la même façon que les boîtiers 30 de la figure 2, les boîtiers porte-capteurs 130 comportent des géophones et un capteur de proximité apte à contrôler le bon ancrage des pointes 132.

Un berceau de protection 136, fixé sur le corps central, protège la sonde des chocs éventuels, essentiellement lorsque les bras sont en position de travail et repliés.

La sonde est suspendue à un câble 134 par exemple de type classique à sept conducteurs, fixé sur l'extrémité supérieure du corps central 106.

Le principe d'utilisation de cette sonde va à présent être décrit.

Après avoir descendu à la profondeur voulue la sonde dont les bras sont en position de repos et repliés, on actionne le vérin 128 pour que les bras viennent en position de travail. Dans le même temps, les boîtiers porte-capteurs sont orientés correctement automatiquement.

Puis on actionne les vérins des bras 116 pour qu'ils occupent une position dépliée jusqu'à ce que leur ancrage dans la paroi soit correct (le signal de bon ancrage donc de bon couplage avec le terrain étant émis par les capteurs de proximité).

Le tir peut alors être effectué et les mesures enregistrées.

On actionne alors les vérins des bras 116 pour qu'ils occupent une position repliée pour descendre ou monter la sonde à une autre profondeur voulue.

Ce mode de réalisation de la sonde permet d'avoir un déploiement indépendant de chaque bras, ce qui permet de réaliser un bon ancrage des bras dans des puits dont la paroi est très irrégulière. De plus, ce mode de réalisation permet l'utilisation d'une telle sonde aussi bien dans des puits de forage de petit diamètre (10 à 30 cm) que dans des puits de forage de grand diamètre - (environ 2 mètres).

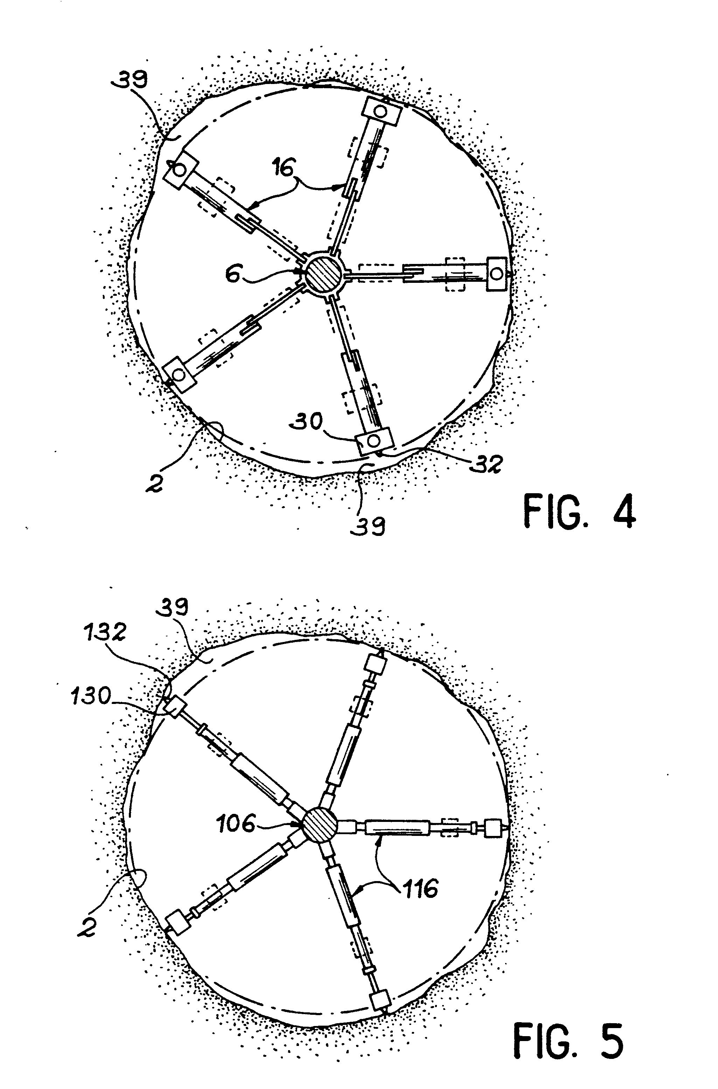

En effet, comme le montrent les figures 4 et 5, les bras 16 de la première réalisation de l'invention se meuvent à l'unisson. Il en résulte que, quand la paroi du puits présente des anfractuosités 39, la sonde peut être ancrée de façon satisfaisante dans la paroi alors que les pointes 32 des bras orientés vers ces anfractuosités 39 flottent encore dans le puits.

Les capteurs logés dans ces bras ne sont donc pas en état de transmettre des informations et il faut en tenir compte dans l'exploitation ultérieure des mesures.

En revanche, la deuxième réalisation de l'invention possède des bras 116 susceptibles d'être déployés indépendamment au moyen des vérins hydrauliques. Les bras 116 continuent tous leur déploiement jusqu'à ce qu'ils s'ancrent dans la paroi du puits. On garantit donc que les capteurs des différents bras 116 fournissent la même information au moment des mesures, ce qui peut faciliter leur exploitation et diminuer les erreurs relatives.

Cette caractéristique explique que cette deuxième réalisation de l'invention puisse être préférée à la première.

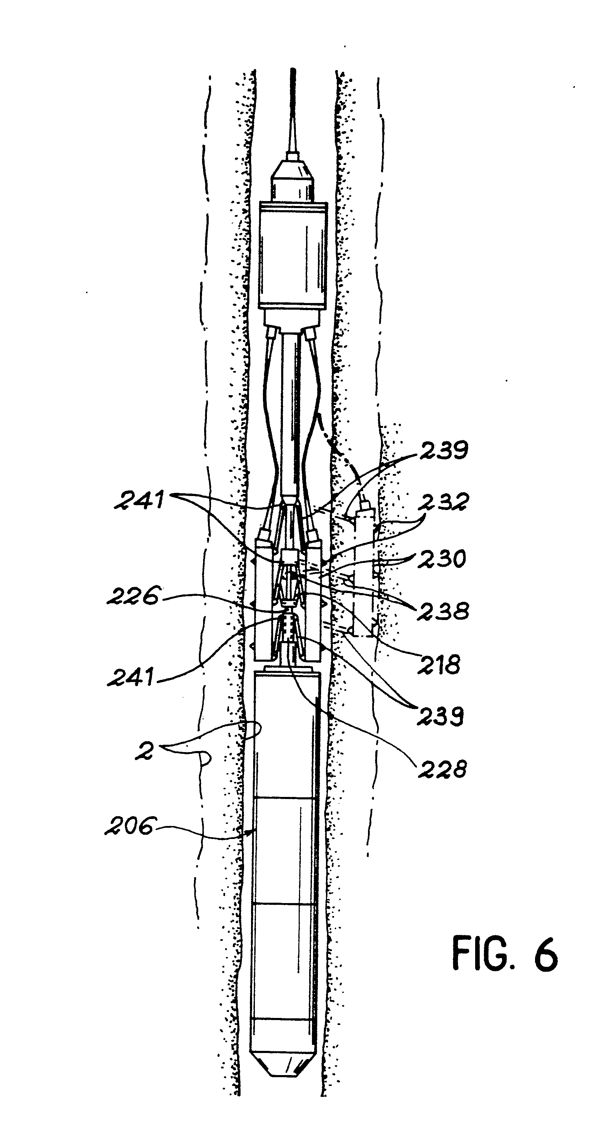

Une troisième réalisation de l'invention est représentée figure 6 et est valable pour les forages de petit diamètre très fréquents dans l'industrie pétrolière. La nécessité de miniaturiser la sonde explique que l'on utilise ici de nouveau un mécanisme simple permettant de déployer les bras à l'unisson.

Dans cette réalisation, les boîtiers porte-capteurs 230, terminés par des pointes 232 qui réalisent l'ancrage dans la paroi 2 du puits, ont une taille plus importante par rapport au reste de la sonde.

C'est pourquoi chaque boîtier porte-capteurs 230 est articulé sur trois bras 238 et 239 : ces bras 238 et 239 sont également articulés en des points fixes 241 du corps central 206, et l'un des bras 238 est en outre articulé en son milieu sur une barre 218 elle-même articulée sur l'extrémité de la tige 226 d'un vérin 228.

Quand la tige 226 du vérin 228 est soulevée, la barre 218 déploie le bras 239 et par conséquent amène les pointes 232 en contact avec la paroi 2 du puits.

Bien entendu, la description ci-dessus n'a été donnée qu'à titre d'exemple, toutes modifications dans les formes de réalisation pouvant être envisagées sans modifier le principe fondamental de l'invention.

On peut par exemple envisager un actionnement électrique ou pneumatique des bras. Le nombre de bras n'est pas limité. Les parties électrique, électronique et hydraulique de commande et de contrôle sont adaptées en fonction des solutions techniques choisies.

## Revendications

1. Sonde sismique comprenant un corps central (6, 106), caractérisée en ce qu'elle comprend en outre au moins trois bras (16, 116) déployables dans des directions différentes autour du corps central, l'extrémité de ces bras étant munie de moyens d'ancrage (32, 132) et de capteurs ; ainsi que des moyens de déployer et de plaquer les extrémités des bras avec une force suffisante sur la paroi (2) d'un puits de forage.

2. Sonde sismique selon la revendication 1, caractérisée en ce que les moyens d'ancrage (32, 132) comprennent au moins une pointe constituant simultanément la partie réceptrice d'un capteur.

3. Sonde sismique selon l'une quelconque des revendications 1 ou 2, caractérisé en ce que les bras sont au nombre de cinq et se déploient à des intervalles angulaires approximativement égaux.

4. Sonde sismique selon l'une quelconque des revendications 1 à 3, caractérisé en ce que les moyens de déployer les bras et de plaquer leur extrémité agissent indépendamment pour chaque bras.

5. Sonde sismique selon l'une quelconque des revendications 1 à 4, caractérisée en ce que chaque bras (116) comprend un vérin dont la tige (112) porte les moyens d'ancrage (132) et les capteurs.

6. Sonde sismique selon l'une quelconque des revendications 1 à 5, caractérisée en ce que les moyens d'ancrage et les capteurs comprennent un boîtier porte-capteurs (130) lié par une articulation (140) à l'extrémité du bras (116).

7. Sonde sismique selon les revendications 5 et 6, et dans laquelle le vérin pivote autour d'une articulation fixe (138) sur le corps central (106), caractérisée en ce que le corps central est muni de moyens (144) pour que le boîtier porte-capteurs (130) occupe une position sensiblement parallèle au bras lorsque celui-ci est dans une position de repos sensiblement parallèle au corps central (106), et une position sensiblement perpendiculaire au bras lorsque celui-ci est dans une position de travail sensiblement perpendiculaire au corps central.

8. Sonde sismique selon l'une quelconque des revendications 1 à 3, caractérisée en ce que chaque bras (16) comprend, disposés sur un anneau (10) commun coulissant le long du corps central (6), une tige fixée sur l'anneau (10) et s'étendant perpendiculairement au corps central, un tube (14) coulissant le long de la tige (12) dont une extrémité éloignée du corps central porte les capteurs et les moyens d'ancrage ; et en ce que les moyens de déployer les bras et de plaquer comprennent, pour chaque bras, deux barres (18, 22) articulées sur le tube, une barre (18) étant articulée en outre sur un point fixe du corps central, l'autre barre (22) étant articulée en outre sur une articulation (24) déplaçable le long du corps central (6).

FIG. 1

FIG. 2

FIG. 3

FIG. 4

FIG. 5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 192 380 (J.R.E. SMITH)<br><br>* Résumé; colonne 4, lignes 9-26,44-46; colonne 7, lignes 20-22; figures 3,4 *<br><br>--- | 1,2,4,<br>5 | G 01 V 11/00<br>G 01 V 1/16 |
| Y | EP-A-0 157 662 (INSTITUT FRANCAIS DU PETROLE)<br>* Résumé; figures 4-7 *<br><br>--- | 1,2,4,<br>5 | |
| A | EP-A-0 155 462 (PRAKLA-SEISMOS)<br>* Résumé; revendications 1,6; figures 1,2 *<br><br>--- | 4,5,7 | |
| A | DE-B-2 031 664 (SCHLUMBERGER)<br>* Revendication 1; figure 1 *<br><br>--- | 6 | |
| A | US-A-4 394 754 (K.H. WATERS)<br><br>--- | | DOMAINES TECHNIQUES RECHERCHES (Int. Cl.4)<br><br>G 01 V<br>E 21 B |
| A | DE-A-3 305 189 (PRAKLA-SEISMOS)<br><br>--- | | |
| A | FR-A-2 501 380 (INSTITUT FRANCAIS DU PETROLE)<br><br>----- | | |

Le présent rapport de recherche a été établi pour toutes les revendications

| Lieu de la recherche | Date d'achevement de la recherche | Examinateur |
|---|---|---|
| LA HAYE | 18-03-1987 | HAASBROEK J.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82